# EUROPEAN PATENT SPECIFICATION

(11) **EP 4 075 954 B1**
(45) Date of publication and mention of the grant of the patent: **31.12.2025**
(21) Application number: 20828370.5
(22) Date of filing: 10.12.2020
(51) Int. Cl.: A01J 5/08

(54) **A TEATCUP**
MELKBECHER
GOBELET TRAYEUR

(30) Priority: 16.12.2019 SE 1951467
(43) Date of publication of application: 26.10.2022
(73) Proprietor: DeLaval Holding AB, 147 21 Tumba (SE)
(72) Inventor: ÄLVEBY, Nils, 147 21 Tumba (SE)
(74) Representative: DeLaval International AB
(86) International application number: PCT/SE2020/051194
(87) International publication number: WO 2021/126049

(56) References cited:
- EP-A1- 0 806 135
- CZ-A3- 2 006 167
- US-A- 4 648 350
- US-B1- 6 308 656

## Description

### TECHNICAL FIELD OF THE INVENTION

The present invention refers to a teatcup configured to be attached to the teat of an animal to be milked according to the preamble of claim 1.

### BACKGROUND OF THE INVENTION AND PRIOR ART

US 9,635,829 discloses a teatcup comprising a connector and a cartridge. The cartridge comprises a sleeve, having a first end and a second end, and a teatcup liner mounted in the sleeve and having an inner space for receiving a teat. The connector is configured to connect a milk conduit to the cartridge. The connector comprises a casing, which encloses a connection space. The casing has an inner surface facing the connection space. The casing comprises an inlet opening for the cartridge to the connection space, and an outlet opening for the milk conduit. Locking means is provided on the inner surface of the casing and configured to permit locking of the cartridge in the connector.

WO 2017/192093 discloses a cartridge insertable into a connector to form a teatcup to be attached to the teat of an animal to be milked. The cartridge comprises an elongated sleeve, having an upper end section and a lower end section, and a teatcup liner pre-mounted in the elongated sleeve. The teatcup liner comprises an upper end portion located at the upper end section, a lower end portion located at the lower end section, and a barrel portion extending between the upper end portion and the lower end portion. The elongated sleeve comprises three separate primary hook members provided circumferentially after each other on an outer surface of the elongated sleeve. Each primary hook member has a lower slide surface sloping upwardly and outwardly, and an upper hook surface extending inwardly.

WO 2014/178783 discloses a teatcup comprising a connector and a cartridge. The connector is associated with or comprises a casing. The teatcup is configured to be attached to the teat of an animal to be milked. The cartridge comprises an elongated sleeve extending in parallel with a longitudinal central axis, and has an upper end section and a lower end section. A teatcup liner is pre-mounted in the elongated sleeve and has an inner space for receiving the teat. A pulsation chamber is formed between an inner side of the elongated sleeve and an outer side of the teatcup liner. The teatcup liner comprises an upper end portion located at the upper end section of the elongated sleeve, a lower end portion located at the lower end section of the elongated sleeve, and a barrel portion extending between the upper end portion and the lower end portion.

A teatcup having a structure corresponding those described in the above discussed prior art documents is advantageous by permitting an easy and quick replacement of the cartridge when the teatcup liner has reached its lifetime. However, the structure has a relatively bulky size of the teatcup as a consequence of the teatcup liner, the elongated sleeve and the casing of the connector arranged in one another. A further issue is to provide a reliable path for the pulsating pressure between the pulse conduit and the pulsation chamber through the elongated sleeve.

US6308656B1 discloses a modular teat cup assembly for use with a milking machine for milking cows. The modular teat cup assembly comprises a hollow tubular shell together with a cartridge assembly slidably received within the shell. The cartridge assembly includes a spool-shaped liner and a framework comprising a pair of opposing sleeve members for supporting the liner. The sleeve members are movable between an open position to permit removal and replacement of the liner, and a closed position for supporting the liner therebetween. A cap removably mounted on the bottom of the shell holds the cartridge assembly within the shell and is used to attach a milking tube in the conventional manner. A head piece includes a mouth for receiving a cow's teat, and is snapped onto the upper end of the shell to complete the modular assembly. US6308656B1 discloses the preamble of claim 1.

### SUMMARY OF THE INVENTION

The purpose of the present invention is to overcome the problems discussed above, and in particular to provide a teatcup enabling a slimmer design.

This purpose is achieved by a teat cup according to claim 1.

The elongated support member may thus form a cage in which the barrel of the cartridge is mounted and stretched between the upper end section and the lower end section of the elongated support member.

The permeable intermediate support structure permits a free flow of gas through the intermediate support structure. The pulsating pressure may thus propagate freely through the intermediate support structure. When the gas in the pulsation chamber is sucked away it will thus flow through the intermediate support structure permitting the barrel of the cartridge to open. When the gas is supplied to the pulsation chamber it will flow through the intermediate support structure permitting the barrel of the cartridge to collapse.

The elongated support member may be slim occupying a small volume of the pulsation chamber. The intermediate support structure of the elongated support member may require less material, and thus have a lower weight, than the elongated sleeves of the cartridge of the prior art initially discussed. Thanks to the upper annular seal element positioned at the upper end of the casing, the pulsation chamber may extend along the axial length, i.e. the entire axial length, of the intermediate support structure, which may ensure a uniform impact by the pulsating pressure along the axial length of the barrel.

According to an embodiment of the invention, the intermediate support structure comprises or consists of a net. A net may offer a rigid support to the barrel and a very low flow resistance to the gas to be transported to and from the pulsation chamber. According to an embodiment of the invention, the intermediate support structure comprises or consists of a perforated sheet. The permeability of the intermediate support structure may thus be achieved by means of a perforation, which may comprise a large number of holes or apertures, or a relatively few large holes or apertures.

According to an embodiment of the invention, the intermediate support structure comprises a number of, for instance three or four or even more, rod-like elements extending between and connecting the upper end section and the lower end section. The rod-like elements may extend in an axial plane incorporating the longitudinal central axis, or in different directions intersecting a respective axial plane.

According to an embodiment, the rod-like elements are provided beside the net. Such rod-like elements beside the net may have a strengthening effect on the intermediate support structure. Possibly, the rod-like elements adjoin the net or are attached to the net.

According to an embodiment, the rod-like elements are provided beside the perforated sheet. Such rod-like elements beside the perforated sheet may have a strengthening effect on the intermediate support structure. Possibly, the rod-like elements adjoin the perforated sheet or are attached to the perforated sheet.

According to an embodiment of the invention, the intermediate support structure is permeable to gas over its entire axial length from the upper end section to the lower end section.

According to an embodiment of the invention, the intermediate support structure has an axial length corresponding to at least 70% of the axial length of the elongated support member, preferably at least 80% of the axial length of the elongated support member, and more preferably at least 90% of the axial length of the elongated support member.

According to an embodiment of the invention, the upper end section comprises a solid ring. The solid ring may ensure a sufficient strength of the elongated support member.

According to an embodiment, the upper end section has an axial length that is at most 15% of the axial length of the intermediate support structure, preferably at most 10% of the axial length of the intermediate support structure, and more preferably at most 5% of the axial length of the intermediate support structure.

According to an embodiment of the invention, the lower end section comprises a solid ring. The solid ring may ensure a sufficient strength of the elongated support member.

According to an embodiment, the lower end section has an axial length that is at most 15% of the axial length of the intermediate support structure, preferably at most 10% of the axial length of the intermediate support structure, and more preferably at most 5% of the axial length of the intermediate support structure.

According to an embodiment of the invention, the upper annular seal element forms a part of the cartridge. The upper annular seal element may comprise or consist of a rubber ring, which may be attached to the cartridge.

According to an embodiment of the invention, the upper annular seal element forms a part of the casing. The upper annular seal element may comprise or consist of a rubber ring, which may be attached to the casing.

According to the invention, a lower part of the barrel is configured to seal against an upper part of a milk conduit. The lower part of the barrel may thus contribute to seal the pulsation chamber from the environment.

According to an embodiment of the invention, the teatcup comprises a pulsation port extending through the casing and permitting communication between the pulsation chamber and a pulse conduit. The pulsation port may comprise a pulse nipple extending from the casing and being configured to permit attachment of the pulse conduit.

According to the invention, the teatcup comprises a mouthpiece comprised by the cartridge and attached to the upper part of the barrel at the upper end section to protrude from the casing when the cartridge is in the inserted position. The mouthpiece comprises an aperture for the teat to be introduced into the inner space. The aperture may be formed by a lip.

### BRIEF DESCRIPTION OF THE DRAWINGS

The present invention is now to be explained more closely through a description of various embodiments and with reference to the drawings attached hereto.
- Fig 1: is a schematic perspective view of a teatcup according to a first embodiment of the invention.
- Fig 2: is a schematic longitudinal sectional view through the teatcup in Fig 1.
- Fig 3: is a schematic side view of an elongated support member of the teatcup in Fig 1.
- Fig 4: is a schematic side view of an elongated support member according to a second embodiment of the invention.
- Fig 5: is a schematic side view of an elongated support member according to a third embodiment of the invention.

### DETAILED DESCRIPTION OF VARIOUS EMBODIMENTS OF THE INVENTION

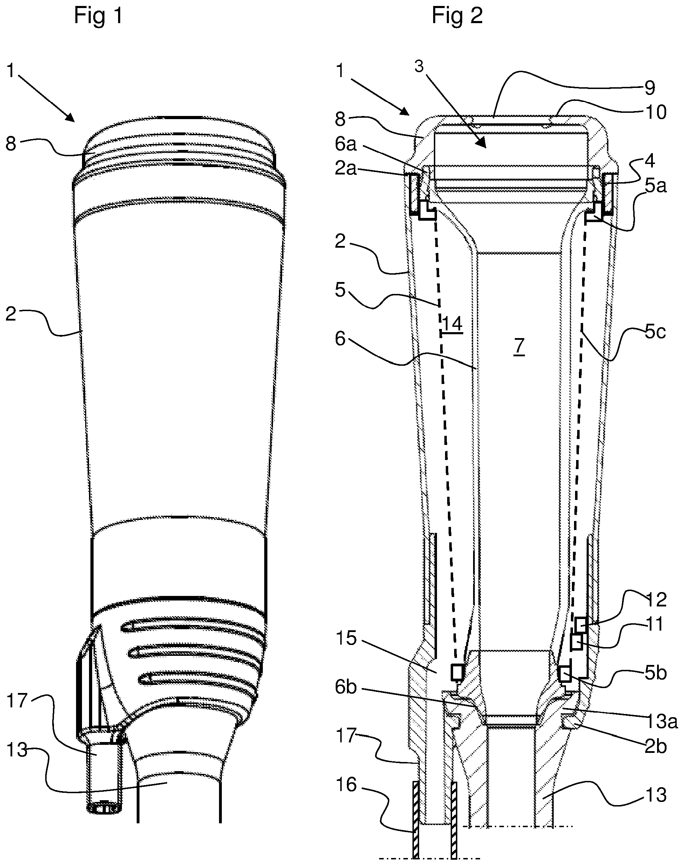

Figs 1 and 2 disclose a teatcup 1 according to a first embodiment, which is configured to be attached to the teat of an animal to be milked. The teatcup 1 comprises a casing 2 having an upper end 2a and a lower end 2b, and a cartridge 3. The cartridge 3 is configured to be inserted to and secured in an inserted position in the casing 1 to to form the teatcup 1. In Figs 1 and 2, the cartridge 3 is inserted in the casing 2 and secured in the inserted position.

The teatcup 1 also comprises an upper annular seal element 4 extending between the cartridge 3 and the casing 2 when the cartridge 3 is in the inserted position. The upper annular seal element 4 may comprise or consist of a rubber ring.

The cartridge 3 comprises an elongated support member 5 comprising an upper end section 5a, a lower end section 5b and an intermediate support structure 5c extending between and connecting the upper end section 5a and the lower end section 5b. The upper end section 5a may comprise or consist of a solid ring, for instance made of a metallic of plastic material. The lower end section 5b may comprise or consist of a solid ring, for instance made of a metallic of plastic material.

The cartridge 3 also comprises a barrel 6 defining an inner space 7 for receiving the teat. The barrel 6 is mounted in the elongated support member 5 and stretched between the upper end section 5a and the lower end section 5b.

The barrel 6 comprises an upper part 6a and a lower part 6b. In the embodiments disclosed, the upper part 6a protrudes above the upper section 5a of the elongated support member 5, and the lower part 6b protrudes below the lower section 5b of the elongated support member 5.

Furthermore, the teatcup 1 comprises a mouthpiece 8. The mouthpiece 8 is comprised by the cartridge 3 and is attached to the upper part 6a of the barrel 6 at the upper end section 5a of the elongated support member 5. The mouthpiece 8 protrudes from the casing 2 when the cartridge 3 is in the inserted position, as can be seen in Figs 1 and 2.

The mouthpiece 8 may comprise an aperture 9 extending through the mouthpiece 8 for permitting the teat to be introduced into the inner space 7. The aperture 9 may be formed by a lip 10 of the mouthpiece 8.

The cartridge 3 comprises a number, for instance, three primary engagement members 11 provided circumferentially after each other on an outer surface of the elongated support member 5, see Fig 2 showing one of the primary engagement members 11. Each of the primary engagement members 11 is configured to interact with a respective secondary engagement member 12, which are provided circumferentially on an inner surface of the casing 2. By means of the primary engagement members 11 and the secondary engagement members 12, the cartridge 3 may be secured in the inserted position in the casing 2 as is illustrated in Fig 2.

In the embodiments disclosed, the primary engagement members 11 are attached to an outer side of the intermediate support structure 5c. The primary engagement members 11 may, however, have another location, for instance be attached to the lower end section 5b.

The teacup 1 is connected to a milk conduit 13. The milk conduit 13 may be attached to the lower end 2b of the casing 2 as can be seen in Fig 2. An upper part 13a of the milk conduit 13 may be arranged inside the casing 2 at the lower end 2b of the casing 2, wherein the lower part 6b of the barrel 6 is configured to seal against the upper part 13a of the milk conduit 13 to form a tight path for the milk from the inner space 7 to the milk conduit 13.

Furthermore, the lower portion 6b of the barrel 6 is configured to seal against the upper part 13a of the milk conduit 13 when the cartridge 3 is secured in the inserted position in the casing 2.

A pulsation chamber 14 is formed between and delimited by the barrel 6, the casing 2 and the annular seal element 4. The pulsation chamber 14 may thus be tightly sealed from the environment when the cartridge 3 is secured in the inserted position in the casing 2.

As can be seen in Fig 2, the upper annular seal element 4 is positioned at the upper end 2a of the casing 2 when the cartridge 3 is in the inserted position. In one embodiment, the upper annular seal element 4 may form a part of the cartridge 3, i.e. the upper annular seal element 4 is attached to the cartridge 3. In another embodiment, the upper annular seal element 4 may form a part of the casing 2, i.e. the upper annular seal element 4 is attached to the casing 2.

The teatcup 1 comprises a pulsation port 15 extending through the casing 2 and permitting communication between the pulsation chamber 14 and a pulse conduit 16. In the embodiments disclosed, the pulsation port 15 comprises a pulse nipple 17 extending from the casing 2. The pulse conduit 16 is attached to the pulse nipple 17.

The teatcup 1 thus creates a free, straight path permitting a free, undisturbed gas flow between the pulse conduit 16 and the pulsation chamber 14 via the pulsation port 15. No obstructing elements are present along the path.

The intermediate support structure 5c is permeable to gas permitting the pulsating pressure to propagate freely through the intermediate support structure. The intermediate support structure 5c may be permeable to gas over its entire axial length from the upper end section 5a to the lower end section 5b.

The intermediate support structure 5c may have an axial length corresponding to at least 70% of the axial length of the elongated support member 5, preferably at least 80% of the axial length of the elongated support member 5, and more preferably at least 90% of the axial length of the elongated support member 5. Thus, the upper end section 5a may have an axial length that is at most 15% of the axial length of the intermediate support structure 5c, preferably at most 10% of the axial length of the intermediate support structure 5c, and more preferably at most 5% of the axial length of the intermediate support structure 5c. Furthermore, the lower end section 5b may have an axial length that is at most 15% of the axial length of the intermediate support structure 5c, preferably at most 10% of the axial length of the intermediate support structure 5c, and more preferably at most 5% of the axial length of the intermediate support structure 5c.

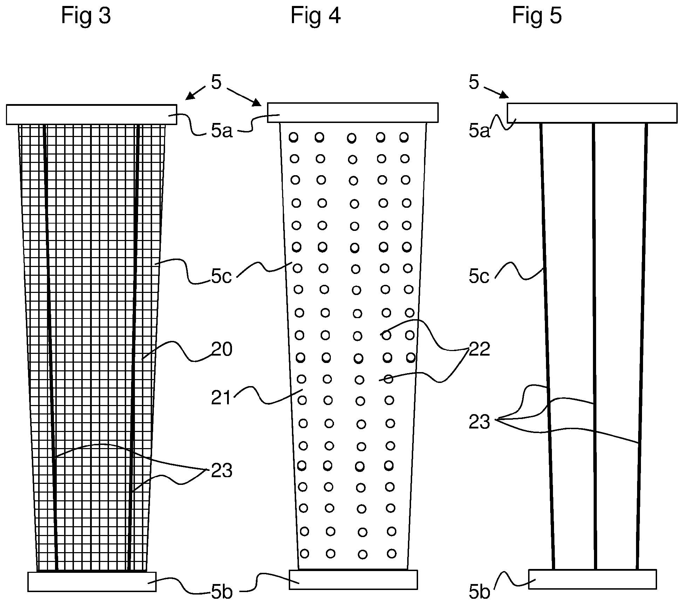

According to the first embodiment, the intermediate support structure 5c comprises or consists of a net 20 that may extend between and connect the upper end section 5a and the lower end section 5b, see also Fig 3. The net 20 may be made of a metal or a plastic material having a sufficient strength.

Fig 4 illustrates a second embodiment, which differs from the first embodiment only in that the intermediate support structure 5c comprises or consists of a perforated sheet 21 that may extend between and connect the upper end section 5a and the lower end section 5b. The perforated sheet 21 may have a perforation, which may comprise a large number of holes 22 or apertures. Fig 4 illustrates a large number of relatively small holes 22, but the perforation 21 may also comprise a relatively few large holes or apertures. The perforated sheet 21 may be made of a metal or a plastic material having a sufficient strength.

Fig 5 illustrates a third embodiment, which differs from the first embodiment only in that the intermediate support structure 5c comprises or consists of a plurality of rod-like elements 23 extending between and connecting the upper end section 5a and the lower end section 5b. The rod like elements 23 may be made of a metal or a plastic material having a sufficient strength. The number of rod like elements 23 may be 3, 4, 5, 6 or even more.

According to a further embodiment, the rod-like elements 23 may be provided adjacent to the net 20 and possibly adjoin and be attached to the net 20 to further strengthen the elongated support member 5 as is illustrated in Fig 3. The rod-like elements 23 may be provided inside or outside the net 20.

According to a still further embodiment, the rod-like elements 23 may be provided adjacent to the perforated sheet 21 and possibly adjoin and be attached to the perforated sheet 21 to further strengthen the elongated support member 5. The rod-like elements 23 may be provided inside or outside the perforated sheet 21.

The present invention is not limited to the embodiments disclosed but may be varied and modified within the scope of the following claims.

## Claims

1. A teatcup (1) configured to be attached to the teat of an animal to be milked, the teatcup (1) comprising
a casing (2) having an upper end (2a) and a lower end (2b),
a cartridge (3) configured to be inserted into the casing (2) to an inserted position to form the teatcup (1),
a pulsation chamber (14), and
an upper annular seal element (4) extending between the cartridge (3) and the casing (2) when the cartridge (3) is in the inserted position in order to seal the pulsation chamber (14) from the environment,
wherein the cartridge (3) comprises
an elongated support member (5) comprising an upper end section (5a), a lower end section (5b) and an intermediate support structure (5c) extending between and connecting the upper end section (5a) and the lower end section (5b), and
a barrel (6) defining an inner space (7) for receiving the teat and mounted in the elongated support member (5) and stretched between the upper end section (5a) and the lower end section (5b),
wherein the intermediate support structure (5c) is permeable to gas,
wherein the pulsation chamber (14) is delimited by the barrel (6), the casing (2) and the upper annular seal element (4),
and wherein the upper annular seal element (4) is positioned at the upper end (2a) of the casing (2) when the cartridge (3) is in the inserted position, **characterized in that**
a mouthpiece (8) is comprised by the cartridge (3) and is attached to the upper part (6a) of the barrel (6) at the upper end section (5a) of the elongated support member (5) to protrude from the casing (2) when the cartridge (3) is in the inserted position, and
an upper part (13a) of a milk conduit (13) may be arranged inside the casing (2) at the lower end (2b) of the casing (2), wherein a lower part (6b) of the barrel (6) is configured to seal against the upper part (13a) of the milk conduit (13).

2. The teatcup (1) according to claim 1, wherein the intermediate support structure (5c) comprises or consists of a net (20).

3. The teatcup (1) according to any one of claims 1 and 2, wherein the intermediate support structure (5c) comprises or consists of a perforated sheet (21).

4. The teatcup (1) according to any one of the preceding claims, wherein the intermediate support structure (5c) comprises a plurality of rod-like elements (23) extending between and connecting the upper end section (5a) and the lower end section (5b).

5. The teatcup (1) according to any one of the preceding claims, wherein the intermediate support structure (5c) is permeable to gas over its entire axial length from the upper end section (5a) to the lower end section (5b).

6. The teatcup (1) according to any one of the preceding claims, wherein the intermediate support structure (5c) has an axial length corresponding to at least 70% of the axial length of the elongated support member (5).

7. The teatcup (1) according to any one of the preceding claims, wherein the upper end section (5a) comprises a solid ring.

8. The teatcup (1) according to any one of the preceding claims, wherein the lower end section (5b) comprises a solid ring.

9. The teatcup (1) according to any one of claims 1-8, wherein the upper annular seal element (4) forms a part of the cartridge (3).

10. The teatcup (1) according to any one of claims 1-8, wherein the upper annular seal element (4) forms a part of the casing (2).

11. The teatcup (1) according to any one of the preceding claims, wherein the teatcup (1) comprises a pulsation port (15) extending through the casing (2) and permitting communication between the pulsation chamber (14) and a pulse conduit (16).

## Patentansprüche

1. Zitzenbecher (1), der konfiguriert ist, um an der Zitze eines zu melkenden Tieres befestigt zu werden, der Zitzenbecher (1) umfassend
ein Gehäuse (2), das ein oberes Ende (2a) und ein unteres Ende (2b) aufweist,
eine Patrone (3), die konfiguriert ist, um in das Gehäuse (2) in eine eingesetzte Position eingesetzt zu werden, um den Zitzenbecher (1) auszubilden,
eine Pulsationskammer (14), und
ein oberes ringförmiges Dichtungselement (4), das sich zwischen der Patrone (3) und dem Gehäuse (2) erstreckt, wenn sich die Patrone (3) in der eingesetzten Position befindet, um die Pulsationskammer (14) gegenüber der Umgebung abzudichten,
wobei die Patrone (3) umfasst
ein längliches Stützelement (5), umfassend einen oberen Endabschnitt (5a), einen unteren Endabschnitt (5b) und eine Zwischenstützstruktur (5c), die sich zwischen dem oberen Endabschnitt (5a) und dem unteren Endabschnitt (5b) erstreckt und diese verbindet, und
einen Zylinder (6), der einen Innenraum (7) zum Aufnehmen der Zitze ausbildet und in dem länglichen Stützelement (5) montiert ist und zwischen dem oberen Endabschnitt (5a) und dem unteren Endabschnitt (5b) gespannt ist,
wobei die Zwischenstützstruktur (5c) gasdurchlässig ist,
wobei die Pulsationskammer (14) durch den Zylinder (6), das Gehäuse (2) und das obere ringförmige Dichtungselement (4) begrenzt wird,
und wobei das obere ringförmige Dichtungselement (4) an dem oberen Ende (2a) des Gehäuses (2) positioniert ist, wenn sich die Patrone (3) in der eingesetzten Position befindet,
**dadurch gekennzeichnet, dass**
ein Mundstück (8) durch die Patrone (3) umfasst ist und an dem oberen Teil (6a) des Zylinders (6) an dem oberen Endabschnitt (5a) des länglichen Stützelements (5) befestigt ist, um aus dem Gehäuse (2) vorzustehen, wenn sich die Patrone (3) in der eingesetzten Position befindet, und
ein oberer Teil (13a) einer Milchleitung (13) innerhalb des Gehäuses (2) an dem unteren Ende (2b) des Gehäuses (2) angeordnet sein kann, wobei ein unterer Teil (6b) des Zylinders (6) konfiguriert ist, um gegen den oberen Teil (13a) der Milchleitung (13) abzudichten.

2. Zitzenbecher (1) nach Anspruch 1, wobei die Zwischenstützstruktur (5c) ein Netz (20) umfasst oder daraus besteht.

3. Zitzenbecher (1) nach einem der Ansprüche 1 und 2, wobei die Zwischenstützstruktur (5c) eine perforierte Lage (21) umfasst oder daraus besteht.

4. Zitzenbecher (1) nach einem der vorstehenden Ansprüche, wobei die Zwischenstützstruktur (5c) eine Vielzahl von stabartigen Elementen (23) umfasst, die sich zwischen dem oberen Endabschnitt (5a) und dem unteren Endabschnitt (5b) erstrecken und diese verbinden.

5. Zitzenbecher (1) nach einem der vorstehenden Ansprüche, wobei die Zwischenstützstruktur (5c) über ihre gesamte axiale Länge von dem oberen Endabschnitt (5a) bis zu dem unteren Endabschnitt (5b) gasdurchlässig ist.

6. Zitzenbecher (1) nach einem der vorstehenden Ansprüche, wobei die Zwischenstützstruktur (5c) eine axiale Länge aufweist, die mindestens 70 % der axialen Länge des länglichen Stützelements (5) entspricht.

7. Zitzenbecher (1) nach einem der vorstehenden Ansprüche, wobei der obere Endabschnitt (5a) einen massiven Ring umfasst.

8. Zitzenbecher (1) nach einem der vorstehenden Ansprüche, wobei der untere Endabschnitt (5b) einen massiven Ring umfasst.

9. Zitzenbecher (1) nach einem der Ansprüche 1 bis 8, wobei das obere ringförmige Dichtungselement (4) einen Teil der Patrone (3) ausbildet.

10. Zitzenbecher (1) nach einem der Ansprüche 1 bis 8, wobei das obere ringförmige Dichtungselement (4) einen Teil des Gehäuses (2) ausbildet.

11. Zitzenbecher (1) nach einem der vorstehenden Ansprüche, wobei der Zitzenbecher (1) eine Pulsationsöffnung (15) umfasst, die sich durch das Gehäuse (2) erstreckt und eine Kommunikation zwischen der Pulsationskammer (14) und einer Pulsleitung (16) ermöglicht.

## Revendications

1. Gobelet trayeur (1) conçu pour être attaché au trayon d'un animal à traire, le gobelet trayeur (1) comprenant
un boîtier (2) ayant une extrémité supérieure (2a) et une extrémité inférieure (2b),
une cartouche (3) conçue pour être insérée dans le boîtier (2) jusqu'à une position insérée pour former le gobelet trayeur (1),
une chambre de pulsation (14), et
un élément d'étanchéité annulaire supérieur (4) s'étendant entre la cartouche (3) et le boîtier (2) lorsque la cartouche (3) est en position insérée afin de rendre étanche la chambre de pulsation (14) de l'environnement,
dans lequel la cartouche (3) comprend
un organe de support allongé (5) comprenant une section d'extrémité supérieure (5a), une section d'extrémité inférieure (5b) et une structure de support intermédiaire (5c) s'étendant entre et reliant la section d'extrémité supérieure (5a) et la section d'extrémité inférieure (5b), et
un cylindre (6) définissant un espace intérieur (7) destiné à recevoir le trayon et monté dans l'organe de support allongé (5) et tendu entre la section d'extrémité supérieure (5a) et la section d'extrémité inférieure (5b),
dans lequel la structure de support intermédiaire (5c) est perméable au gaz, dans lequel la chambre de pulsation (14) est délimitée par le cylindre (6), le boîtier (2) et l'élément d'étanchéité annulaire supérieur (4),
et dans lequel l'élément d'étanchéité annulaire supérieur (4) est positionné au niveau de l'extrémité supérieure (2a) du boîtier (2) lorsque la cartouche (3) est en position insérée,
**caractérisé en ce que**
un embout (8) fait partie de la cartouche (3) et est attaché à la partie supérieure (6a) du cylindre (6) au niveau de la section d'extrémité supérieure (5a) de l'organe de support allongé (5) pour faire saillie depuis le boîtier (2) lorsque la cartouche (3) est en position insérée, et
une partie supérieure (13a) d'un conduit de lait (13) peut être agencée à l'intérieur du boîtier (2) au niveau de l'extrémité inférieure (2b) du boîtier (2), dans lequel une partie inférieure (6b) du cylindre (6) est conçue pour être étanche contre la partie supérieure (13a) du conduit de lait (13).

2. Gobelet trayeur (1) selon la revendication 1, dans lequel la structure de support intermédiaire (5c) comprend ou consiste en un filet (20).

3. Gobelet trayeur (1) selon l'une quelconque des revendications 1 et 2, dans lequel la structure de support intermédiaire (5c) comprend ou consiste en une feuille perforée (21).

4. Gobelet trayeur (1) selon l'une quelconque des revendications précédentes, dans lequel la structure de support intermédiaire (5c) comprend une pluralité d'éléments en forme de tige (23) s'étendant entre et reliant la section d'extrémité supérieure (5a) et la section d'extrémité inférieure (5b).

5. Gobelet trayeur (1) selon l'une quelconque des revendications précédentes, dans lequel la structure de support intermédiaire (5c) est perméable au gaz sur toute sa longueur axiale, de la section d'extrémité supérieure (5a) à la section d'extrémité inférieure (5b).

6. Gobelet trayeur (1) selon l'une quelconque des revendications précédentes, dans lequel la structure de support intermédiaire (5c) a une longueur axiale correspondant à au moins 70 % de la longueur axiale de l'organe de support allongé (5).

7. Gobelet trayeur (1) selon l'une quelconque des revendications précédentes, dans lequel la section d'extrémité supérieure (5a) comprend un anneau solide.

8. Gobelet trayeur (1) selon l'une quelconque des revendications précédentes, dans lequel la section d'extrémité inférieure (5b) comprend un anneau solide.

9. Gobelet trayeur (1) selon l'une quelconque des revendications 1 à 8, dans lequel l'élément d'étanchéité annulaire supérieur (4) fait partie de la cartouche (3).

10. Gobelet trayeur (1) selon l'une quelconque des revendications 1 à 8, dans lequel l'élément d'étanchéité annulaire supérieur (4) fait partie du boîtier (2).

11. Gobelet trayeur (1) selon l'une quelconque des revendications précédentes, dans lequel le gobelet trayeur (1) comprend un orifice de pulsation (15) s'étendant à travers le boîtier (2) et permettant une communication entre la chambre de pulsation (14) et un conduit de pulsation (16).
